# FASCICULE DE BREVET EUROPEEN

(11) **EP 2 960 563 B1**
(45) Date de publication et mention de la délivrance du brevet: **21.10.2020**
(21) Numéro de dépôt: 15172474.7
(22) Date de dépôt: 17.06.2015
(51) Int. Cl.: F16L 5/04, H02G 3/32

(54) **ENSEMBLE COMPRENANT UN ÉLÉMENT TRAVERSANT ET AU MOINS UN MANCHON COUPE-FEU**
EINHEIT, DIE EIN DURCHFÜHRUNGSELEMENT UND MINDESTENS EINE BRANDSCHUTZMUFFE UMFASST
ASSEMBLY COMPRISING A LEADTHROUGH MEMBER AND AT LEAST ONE FIRE SLEEVE

(30) Priorité: 27.06.2014 FR 1456047
(43) Date de publication de la demande: 30.12.2015
(73) Titulaire: Saint-Gobain PAM, 21 Avenue Camille Cavallier 54700 Pont-à-Mousson (FR)
(72) Inventeur: SUBRA, Renaud, 57000 METZ (FR); BEAUD, Laurent, 54000 NANCY (FR); MARTIN, Alain, 54380 SAIZERAIS (FR)
(74) Mandataire: Lavoix

(56) Documents cités:
- DE-A1- 3 606 339
- DE-A1-102005 048 148
- DE-A1-102011 056 822
- DE-C1- 3 700 473
- US-A1- 2006 096 207

## Description

La présente invention concerne un ensemble comprenant un élément traversant s'étendant sensiblement selon une direction longitudinale, l'élément traversant étant destiné à traverser une paroi de séparation.

L'invention concerne également un procédé d'installation d'un manchon coupe-feu au niveau d'une paroi de séparation traversée par un élément traversant.

Dans les bâtiments, pour prévenir ou limiter la propagation d'un incendie d'un côté d'une paroi de séparation, telle qu'une dalle ou un mur, à l'autre côté, il est connu d'isoler thermiquement le côté de la paroi de séparation exposée au feu, et de dissiper la chaleur du côté non exposé au feu. Ceci permet de limiter l'élévation en température du côté non exposé au feu et donc d'empêcher ou de retarder l'apparition de flammes du côté initialement non exposé au feu.

Toutefois, si un élément traversant, comme par exemple une canalisation à base de fer traverse la paroi de séparation, les solutions classiques précitées sont d'une efficacité limitée, du fait que l'élément traversant constitue un très bon conducteur de la chaleur générée du côté exposé au feu vers le côté non exposé au feu.

Pour retarder la propagation d'un incendie, il est connu d'entourer l'élément traversant par un manchon coupe-feu à base de laine minérale ou par du plâtre posé en bandelettes ou projeté autour de l'élément traversant. Ces solutions présentent systématiquement au moins l'un des inconvénients suivants : difficulté d'installation, encombrement important, matériau coupe-feu onéreux et difficulté d'atteindre des durées coupe-feu de, par exemple, quatre heures.

Le document US 2006/096207 décrit un ensemble pour refroidir un conduit traversant une barrière anti-feu. Le document DE102011056822 décrit un ensemble avec une enveloppe et un manchon coupe-feu.

Un but de l'invention est de fournir un ensemble tel que décrit ci-dessus, qui permette de lutter efficacement contre la propagation d'un incendie du côté de la paroi de séparation exposé au feu vers l'autre côté, et qui soit d'une réalisation à la fois simple et économique.

A cet effet, l'invention a pour objet un ensemble selon la revendication 1.

Selon des modes particuliers de réalisation, l'ensemble comprend l'une ou plusieurs des caractéristiques suivantes, prise(s) isolément ou selon toutes les combinaisons techniquement possibles selon les revendications :
- le manchon comprend une substance ayant une capacité thermique volumique d'au moins 1000 kJ/(m³.K) et/ou une chaleur latente massique de changement d'état physique, dans une plage de températures comprises entre 0°C et 210°C, au moins égale à 200 kJ/kg ;
- le colloïde est une colle, un gel ou une cire ;
- l'enveloppe est en métal, en plastique ou en bois, et de préférence en fonte ;
- le manchon présente radialement une épaisseur, le ratio de l'extension longitudinale de l'enveloppe sur l'épaisseur étant compris entre 0,5 et 7 ;
- l'élément traversant et l'enveloppe sont sensiblement coaxiaux, et de préférence de section sensiblement circulaire ; et
- l'ensemble comprend en outre :
   - une deuxième enveloppe en matériau rigide, disposée autour de l'élément traversant, l'élément traversant s'étendant à travers un volume interne défini par la deuxième enveloppe, la deuxième enveloppe ayant une extension longitudinale inférieure à l'extension longitudinale de l'élément traversant,
   - un deuxième manchon s'étendant entre une surface externe de l'élément traversant et une surface interne de la deuxième enveloppe, le deuxième manchon comprenant un liant hydraulique ou un colloïde, la deuxième enveloppe et le deuxième manchon se situant longitudinalement de l'autre côté de la paroi de séparation par rapport à l'enveloppe et au manchon ;
- l'ensemble comprend en outre un matériau de remplissage, de préférence en mortier de ciment, destiné à combler un espace vide situé entre l'élément traversant et la paroi de séparation ;
- l'élément traversant comprend un raccord, l'enveloppe comprenant au moins deux parties rigides adaptées pour entourer le raccord, au moins temporairement, pendant que le manchon est installé entre l'élément traversant et l'enveloppe ;
- le manchon comprend un liant hydraulique ou un colloïde ; et
- l'ensemble comprend optionnellement un isolant acoustique ou mécanique, le manchon comprenant une première partie s'étendant radialement entre la surface externe de l'élément traversant et la surface interne de l'enveloppe, et une deuxième partie s'étendant radialement de la surface externe jusqu'à l'isolant acoustique ou mécanique, ou, en cas d'absence de l'isolant acoustique ou mécanique, jusqu'à la paroi de séparation.

L'invention a également pour objet un procédé d'installation d'un manchon destiné à agir comme un coupe-feu au niveau d'une paroi de séparation traversée par un élément traversant s'étendant sensiblement selon une direction longitudinale, le procédé comprenant au moins les étapes selon la revendication 11.

L'invention sera mieux comprise à la lecture de la description qui va suivre, donnée uniquement à titre d'exemple, et faite en se référant aux dessins annexés, sur lesquels :
- la figure 1 est une vue en coupe d'un ensemble selon un premier mode de réalisation de l'invention, dans lequel l'élément traversant s'étend à travers une dalle, le manchon s'étendant au-dessus de la dalle,
- la figure 2 est une vue en coupe d'un ensemble selon un deuxième mode de réalisation de l'invention, dans lequel l'élément traversant s'étend à travers une dalle, le manchon s'étendant en dessous de la dalle,
- la figure 3 est une vue en coupe d'un ensemble selon un troisième mode de réalisation de l'invention, dans lequel l'élément traversant s'étend à travers une dalle et comprend un raccord, l'enveloppe comprenant deux parties fixées l'une sur l'autre de manière à entourer le raccord,
- la figure 4 est une vue en de dessus de l'ensemble représenté sur la figure 3, l'enveloppe étant dans une configuration ouverte,
- la figure 5 est une vue en coupe d'un ensemble selon un quatrième mode de réalisation, dans lequel le manchon s'étend radialement dans un espace situé entre l'élément traversant et la paroi de séparation, et
- la figure 6 est une vue en coupe d'une variante de l'ensemble représenté sur la figure 5.

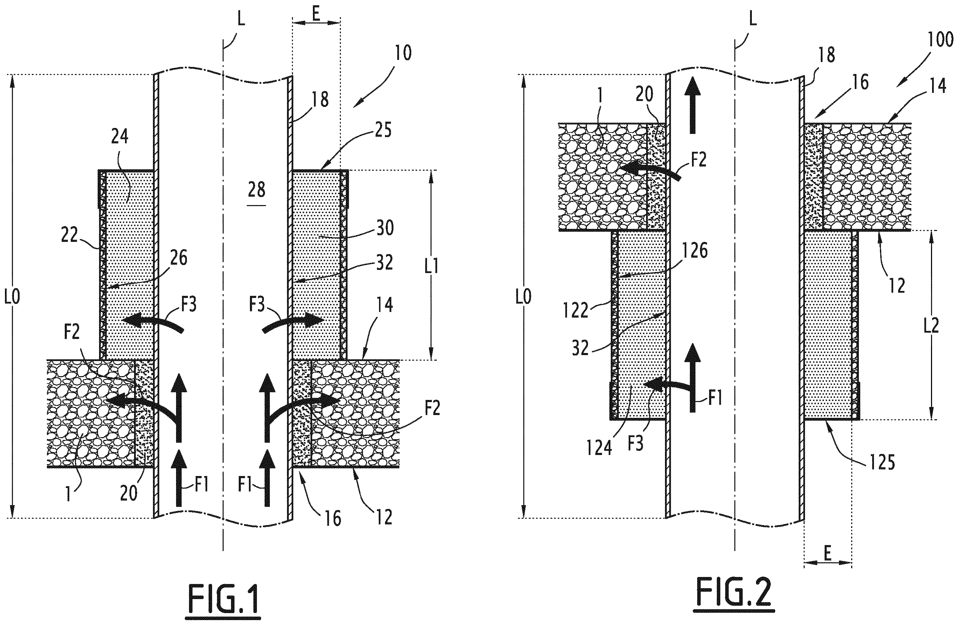

En référence à la figure 1, on décrit une paroi de séparation 1 qui forme une dalle appartenant par exemple à un bâtiment (non représenté), et un ensemble 10 selon un premier mode de réalisation de l'invention.

La paroi de séparation 1 est par exemple sensiblement horizontale et avantageusement réalisée en béton. Elle comprend un côté inférieur 12 susceptible d'être exposé à un incendie et, un côté supérieur 14 que l'on souhaite protéger de l'incendie. La paroi de séparation 1 définit en outre un passage 16 entre le côté inférieur 12 et le côté supérieur 14.

L'ensemble 10 comprend un élément traversant 18, en l'occurrence une canalisation métallique, par exemple en fonte, s'étendant sensiblement selon une direction longitudinale L à travers le passage 16 de la dalle, un matériau de remplissage 20 s'étendant entre l'élément traversant et la paroi de séparation 1, une enveloppe 22 rigide disposée autour de l'élément traversant, et un manchon 24 propre à agir comme un coupe-feu à caractère dissipatif.

L'ensemble 10 comprend avantageusement aussi un capuchon 25 propre à fermer l'enveloppe 22 du côté longitudinalement opposé à la paroi de séparation 1.

L'élément traversant 18 est par exemple une canalisation destinée à transporter des effluents liquides, du gaz ou un autre fluide sous pression ou non, une gaine pour des installations électriques ou de télécommunication, ou encore un conduit d'aération ou d'extraction de fumées. L'élément traversant est de préférence en métal, mais peut aussi être en un autre matériau tel que par exemple une matière plastique.

L'élément traversant 18 s'étend de part et d'autre de la paroi de séparation 1 selon la direction longitudinale L. L'élément traversant 18 présente une extension longitudinale L0 inférieure à un mètre, de l'ordre du mètre, ou bien d'au moins quelques mètres. L'élément traversant 18 présente par exemple une section circulaire.

La direction longitudinale L est par exemple sensiblement verticale, c'est-à-dire, dans l'exemple représenté, sensiblement perpendiculaire à la paroi de séparation 1.

Selon une variante non représentée, la direction longitudinale L et l'élément traversant 18 forment un angle non nul avec la verticale au niveau de la paroi de séparation 1. Cet angle est par exemple compris entre 0° et 45°

Selon une autre variante non représentée, la paroi de séparation 1 est un mur, par exemple sensiblement vertical. La direction longitudinale L est par exemple sensiblement horizontale. Cette variante est illustrée en tournant la figure 1 d'un quart de tour vers la gauche ou vers la droite et tout ce qui a été dit ci-dessus concernant la structure et le fonctionnement de l'ensemble 10 se transpose à cette variante.

Le matériau de remplissage 20 est par exemple un matériau de désolidarisation acoustique, tel que du polyéthylène ou une matière intumescente, une laine minérale, un mortier de ciment, ou un matériau identique à celui de la paroi de séparation 1.

Le matériau de remplissage 20 s'étend avantageusement sur toute l'épaisseur de la paroi de séparation 1 selon la direction longitudinale L.

Le matériau de remplissage 20 est adapté pour boucher le passage 16 entre l'élément traversant 18 et la paroi de séparation 1. Comme on le verra ci-après, la présence du matériau de remplissage 20 est optionnelle.

L'enveloppe 22 repose par exemple sur la paroi de séparation 1. L'enveloppe 22 comporte une surface interne 26 sensiblement parallèle à la direction longitudinale L. L'enveloppe 22 présente par exemple une section circulaire perpendiculairement à la direction longitudinale L, et est avantageusement coaxiale avec l'élément traversant 18. L'enveloppe 22 présente une extension longitudinale L1 inférieure à l'extension longitudinale L0 de l'élément traversant 18. L'enveloppe 22 définit un volume interne 28 traversé longitudinalement par l'élément traversant 18, et définit un volume interstitiel 30 occupé par le manchon 24.

En variante, l'enveloppe 22 ne présente pas une forme cylindrique, mais présente une forme simplement adaptée pour entourer l'élément traversant 18.

Le manchon 24 s'étend radialement entre la surface interne 26 de l'enveloppe 22 et une surface externe 32 de l'élément traversant 18.

Le manchon 24 comprend une substance ayant une capacité thermique volumique d'au moins 1000 kJ/(m³.K) et/ou une chaleur latente massique de changement d'état physique, dans une plage de températures comprises entre 0°C et 210°C, au moins égale à 200 kJ/kg. Cette substance est adaptée pour subir une transition de phase endothermique dans une plage de températures comprises entre 0°C et 210°C, et ce par fusion ou vaporisation.

Avantageusement, cette substance est de l'eau, une huile ou une cire.

De manière préférentielle, le manchon 24 comprend un liant hydraulique, et est avantageusement constitué de mortier de ciment, de béton ou de plâtre.

En variante, le manchon 24 comprend un colloïde, et est notamment constitué d'un colloïde, par exemple une colle, un gel ou une cire.

En variante encore, le manchon 24 est un mélange d'un matériau à base d'un liant hydraulique et d'un colloïde.

Le manchon 24 présente radialement une épaisseur E. Avantageusement, le ratio L1/E est compris entre 0,5 et 7,0.

L'enveloppe 22 est en un matériau rigide, par exemple en métal, en plastique ou en bois, afin de permettre la mise en place du manchon 24 par coulée ou injection dans le volume interstitiel 30. L'enveloppe 22 est avantageusement en un matériau incombustible, notamment en fonte.

Un procédé d'installation de l'ensemble 10 va maintenant être décrit.

Tout d'abord, au moment où l'élément traversant 18 est installé à travers la paroi de séparation 1, ou bien après l'installation de l'élément traversant, l'enveloppe 22 est mise en place autour de la canalisation primaire.

En général, l'élément traversant 18 est réalisé en plusieurs morceaux, la jonction entre les deux morceaux les plus proches de la paroi de séparation 1 étant par exemple placée dans le passage 16.

Optionnellement, si l'espace entre l'élément traversant 18 et la paroi de séparation 1 est trop important, l'espace entre l'élément traversant 18 et la paroi de séparation est comblé par le matériau de remplissage 20, de façon à permettre la mise en place ultérieure de l'enveloppe 22.

Ensuite, le manchon 24 est installé entre la surface externe 32 de l'élément traversant 18 et la surface interne 26 de l'enveloppe 22. L'enveloppe 22 est suffisamment rigide et étanche pour que le manchon 24 puisse être coulé ou injecté dans l'espace interstitiel 30, entre l'enveloppe 22 rigide et l'élément traversant 18. Le mortier de ciment, le béton, le plâtre ou autre matériau formant le manchon 24 vient combler le volume interstitiel 30 partiellement ou en totalité.

En variante, le manchon 24 et le matériau de remplissage 20 sont en un même matériau et sont mis en place au même moment.

En variante encore, l'enveloppe 22 est retirée après mise en place et prise du manchon 24. Cependant, pour les raisons explicitées par la suite, il est préférable de laisser l'enveloppe 22 en place autour du manchon 24.

Le fonctionnement de l'ensemble 10 se déduit de sa structure et va maintenant être décrit brièvement.

Si un incendie se développe du côté inférieur 12 de la paroi de séparation 1, un flux de chaleur se met à remonter par les parois à base de fer de l'élément traversant 18, comme symbolisé par les flèches F1 sur la figure 1.

Lorsque le matériau de remplissage 20 est présent, une partie du flux de chaleur se diffuse à partir de l'élément traversant 18 dans la paroi de séparation 1 à travers le matériau de remplissage 20, comme symbolisé par les flèches F2 sur la figure 1. Sinon la partie de flux passe directement de l'élément traversant 18 à la paroi de séparation 1.

Une partie importante du flux de chaleur résiduel arrive dans le manchon 24 et dans l'enveloppe 22, comme symbolisé par les flèches F3 sur la figure 1.

Ainsi, l'échauffement de l'élément traversant 18 au-dessus du manchon 24 est limité. De même, l'échauffement de la surface externe de l'enveloppe 22 et du côté supérieur 14 de la paroi de séparation 1 est également limité.

En outre, l'enveloppe 22 rigide forme un fourreau qui maintient le manchon 24 et l'empêche de se détériorer, de se désagréger ou même de s'effondrer du fait de l'incendie. Ceci prolonge la protection conférée par le manchon 24.

Par sa capacité calorifique propre, l'enveloppe 22 en fonte allonge encore la durée de résistance au feu en absorbant une partie du flux de chaleur montant dans l'élément traversant 18.

Le manchon 24 est réalisable simplement. Il n'est par exemple pas nécessaire de l'armer.

L'ensemble 10 présente l'avantage de faire appel à des matériaux bon marché.

Ainsi, grâce aux caractéristiques ci-dessus, l'ensemble 10 permet de lutter efficacement contre la propagation d'un incendie du côté de la paroi de séparation exposé au feu vers l'autre côté, et est d'une réalisation à la fois simple et économique.

La tendance du marché est d'assurer une protection contre le feu d'au moins deux heures et jusqu'à quatre heures. Grâce à l'ensemble 10, une durée de résistance au feu de quatre heures est facilement atteinte.

Pour une durée coupe-feu visée, il existe une valeur optimale pour l'épaisseur E et pour la longueur L1 du manchon 24 qui dépend de la composition du manchon 24, des diamètres de l'élément traversant 18 et de l'enveloppe 22, ainsi que de l'épaisseur de la paroi de séparation 1.

Lors de la pose de l'élément traversant 18 et de l'enveloppe 22, il est avantageux de les centrer, de manière à ce que le manchon 24 ait une épaisseur E sensiblement uniforme autour de l'élément traversant.

En référence à la figure 2, on décrit un ensemble 100 selon un deuxième mode de réalisation de l'invention. L'ensemble 100 est analogue à l'ensemble 10 représenté sur la figure 1. Les éléments similaires sont désignés sur la figure 2 par les mêmes références numériques et ne seront pas décrits à nouveau. Seules les différences seront décrites en détail ci-après.

L'ensemble 100 diffère de l'ensemble 10 représenté sur la figure 1 uniquement par le fait qu'il comprend une enveloppe 122 rigide et un manchon 124 se situant en dessous de la paroi de séparation 1. L'enveloppe 122 présente une extension longitudinale L2 inférieure à l'extension longitudinale L0 de l'élément traversant 18. L'enveloppe 122 comporte une surface interne 126 sensiblement parallèle à la direction longitudinale L.

L'installation du manchon 124 est réalisée par coulée par le dessus de la dalle ou par injection à travers un capuchon 125 qui ferme l'enveloppe 122 du côté longitudinalement opposé à la paroi de séparation 1.

Le fonctionnement de l'ensemble 100 est analogue à celui de l'ensemble 10, si ce n'est que le flux de chaleur F1 remontant par l'élément traversant 18 se diffuse d'abord dans le manchon 124 et dans l'enveloppe 122 selon la flèche F3, puis dans la paroi de séparation 1 à travers le matériau de remplissage 20 selon la flèche F2.

Il est bien sûr possible de combiner le premier et le deuxième modes de réalisation, par exemple en mettant en œuvre deux enveloppes respectivement analogues à l'enveloppe 22 représentée sur la figure 1 et à l'enveloppe 122 représentée sur la figure 2, et deux manchons respectivement analogues au manchon 24 représenté sur la figure 1 et au manchon 124 représenté sur la figure 2.

Il est ainsi possible de répondre favorablement à diverses contraintes d'encombrement rencontrées sur les chantiers, en utilisant le premier mode de réalisation ou le deuxième mode de réalisation, ou encore les deux à la fois.

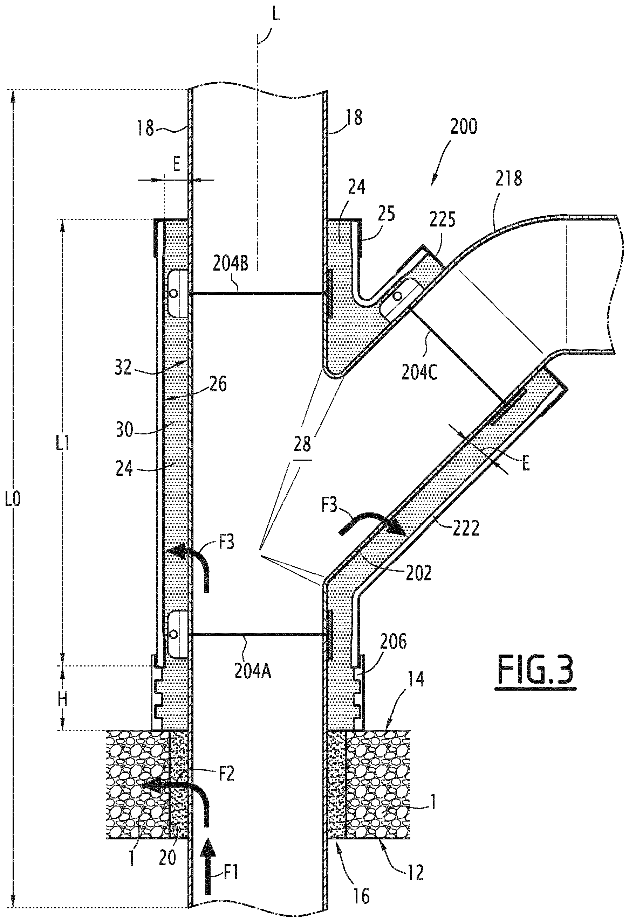

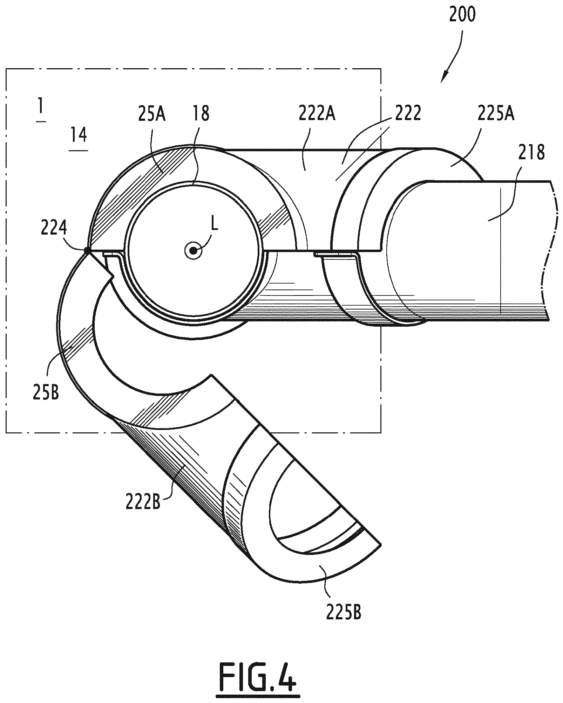

En référence aux figures 3 et 4, on décrit un ensemble 200 selon un troisième mode de réalisation de l'invention. L'ensemble 200 est analogue à l'ensemble 10 représenté sur la figure 1. Les parties similaires de l'ensemble 200 portent les mêmes références numériques et ne seront pas décrites à nouveau. Seules les différences seront décrites en détail ci-après.

Dans l'ensemble 200, l'élément traversant 18 comporte un raccord 202, dans l'exemple en « T », permettant d'installer une dérivation 218.

Le raccord 202 se situe par exemple au-dessus de la paroi de séparation 1. Le raccord 202 est relié au reste de l'élément traversant 18 par des jonctions 204A, 204B, 204C comportant des colliers de serrage et/ou des joints d'étanchéité.

L'ensemble 200 comporte une enveloppe 222 rigide adaptée pour entourer le raccord 202. Comme visible sur la figure 4, l'enveloppe 222 comprend par exemple deux parties 222A, 222B rigides, propres à être fixées l'une sur l'autre de manière à entourer le raccord 202.

L'enveloppe 222 est mobile entre une configuration ouverte représentée sur la figure 4, et une configuration fermée dans laquelle la partie 222B vient au contact de la partie 222A de manière à définir le volume interstitiel 30. L'enveloppe 222 se situe sensiblement à une distance de l'élément traversant 18 définissant l'épaisseur E du manchon 24.

Les parties 222A, 222B, dans la configuration fermée, sont au contact l'une de l'autre par exemple selon un plan sensiblement parallèle à la direction longitudinale L.

Dans sa configuration fermée, l'enveloppe 222 définit une dérivation adaptée pour entourer la dérivation 218 de la canalisation primaire 18.

L'ensemble 200 comprend un deuxième capuchon 225 (figure 3) comportant deux parties 225A, 225B (figure 4). Le capuchon 225 est adapté pour fermer la dérivation de l'enveloppe 222 du côté distal par rapport à la paroi de séparation 1.

De même, le capuchon 25 comporte deux parties 25A, 25B.

Avantageusement, l'ensemble 200 comporte en outre une rallonge 206 située longitudinalement entre l'enveloppe 222 et la paroi de séparation 1. La rallonge 206 se situe avantageusement dans le prolongement de l'enveloppe 222. La rallonge 206 permet d'ajuster la distance H à laquelle l'enveloppe 222 se trouve de la paroi de séparation 1 selon la direction longitudinale L.

La rallonge 206 est par exemple constituée d'une portion de tuyau en fonte.

La partie 222B est par exemple fixée sur la partie 222A à l'aide d'une liaison 224. La liaison entre les parties 222B et 222A comprend avantageusement une articulation autour d'un axe sensiblement parallèle à la direction longitudinale L.

En variante (non représentée), les parties 222B et 222A sont simplement posées l'une contre l'autre.

Les parties 222A et 222B, dans la configuration fermée, sont maintenues l'une contre l'autre à l'aide d'un organe de liaison approprié (non représenté), par exemple un adhésif, une sangle, ou un collier.

L'installation de l'ensemble 200 est analogue à celle de l'ensemble 10 représenté sur la figure 1, si ce n'est que la mise en place de l'enveloppe 222 de l'ensemble 200 comporte une sous-étape de fixation des parties 222A, 222B l'une sur l'autre à l'aide de l'organe de liaison.

Le fonctionnement et les avantages de l'ensemble 200 sont analogues à ceux de l'ensemble 10.

Selon des variantes non représentées, l'élément traversant 18 comporte un ou plusieurs raccords permettant d'installer une ou plusieurs dérivations supplémentaires analogues à la dérivation 218. L'enveloppe 222 rigide comprend alors deux parties ou plus, de manière à entourer, dans sa configuration fermée, tous les embranchements définis par le ou les raccords.

En fonction de la durée coupe-feu visée, la longueur L1 peut être réduite, de sorte que l'enveloppe 222 entourant le raccord 202 représenté sur la figure 3 peut se réduire à un simple cylindre s'étendant longitudinalement entre la paroi de séparation 1 et le raccord 202, sans englober la dérivation 218.

Comme visible sur la figure 1, l'enveloppe 22 de l'ensemble 10 s'étend longitudinalement à partir de la paroi de séparation 1 vers le haut. L'enveloppe 22 est avantageusement disposée contre la paroi de séparation 1.

En variante, le matériau de remplissage 20 est par exemple un matériau de désolidarisation acoustique ou mécanique, tel que du polyéthylène ou une laine minérale, une matière intumescente, un mortier de ciment, ou un matériau identique à celui de la paroi de séparation 1.

Par « désolidarisation mécanique », on entend ici que le matériau de remplissage 20 est résilient et qu'il est capable d'absorber des vibrations au niveau de la paroi de séparation 1.

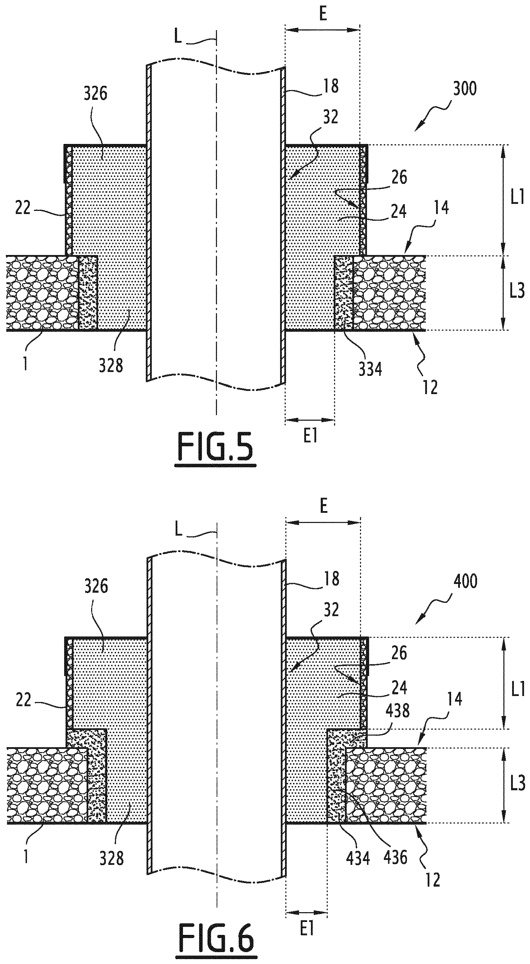

En référence à la figure 5, on décrit un ensemble 300 selon un quatrième mode de réalisation. L'ensemble 300 est analogue à l'ensemble 10 représenté sur la figure 1. Les éléments similaires sont désignés sur la figure 5 par les mêmes références numériques et ne seront pas décrits à nouveau. Seules les différences seront décrites en détail ci-après.

L'ensemble 300 diffère de l'ensemble 10 représenté sur la figure 1 par la forme du manchon 24, et la présence optionnelle d'un isolant acoustique ou mécanique 334 disposé dans le passage 16 défini par la paroi de séparation 1.

Le manchon 24 comprend une première partie 326 s'étendant radialement depuis la surface externe 32 de l'élément traversant 18 jusqu'à la surface interne 26 de l'enveloppe 22, et une deuxième partie 328 s'étendant radialement de la surface externe 32 de l'élément traversant 18 jusqu'à l'isolant acoustique ou mécanique 334, ou, en cas d'absence de cet isolant acoustique ou mécanique, jusqu'à la paroi de séparation 1.

La première partie 326 forme une partie distale du manchon 24 par rapport à la paroi de séparation 1 selon la direction longitudinale L.

Avantageusement, la première partie 326 présente longitudinalement la même extension L1 que l'enveloppe 22.

La deuxième partie 328 forme une partie proximale du manchon 24. La deuxième partie 328 présente une extension longitudinale L3 sensiblement égale à l'épaisseur de la paroi de séparation 1.

Radialement, la deuxième partie 328 présente avantageusement une épaisseur E1 inférieure à l'épaisseur E de la première partie 326. Le ratio E1/E est sensiblement compris entre 0,5 et 1.

La première partie 326 et la deuxième partie 328 sont réalisées de préférence en un même matériau, mais peuvent aussi être réalisées en des matériaux distincts.

L'isolant acoustique ou mécanique 334 sépare la deuxième partie 328 du manchon 24 de la paroi de séparation 1. L'isolant acoustique ou mécanique 334 présente par exemple une forme sensiblement cylindrique, et présente avantageusement l'extension longitudinale L3 mentionnée plus haut. L'isolant acoustique ou mécanique 334 est par exemple constitué de polyéthylène, d'une laine minérale, ou d'une matière végétale telle que du liège.

L'isolant acoustique ou mécanique 334 est mis en place avant le manchon 24.

On a représenté sur la figure 6 un ensemble 400 constituant une variante de l'ensemble 300 représenté sur la figure 5.

L'ensemble 400 diffère de l'ensemble 300 par un isolant acoustique ou mécanique 434 de forme différente de celle de l'isolant acoustique ou mécanique 334 représenté sur la figure 5.

Dans l'ensemble 400, l'isolant acoustique ou mécanique 434 possède une première partie 436 analogue à l'isolant acoustique ou mécanique 334, et une deuxième partie 438 s'étendant longitudinalement, à partir de la première partie 436, entre le côté supérieur 14 de la paroi de séparation 1 et le manchon 24. Avantageusement, la deuxième partie 438 se prolonge radialement pour s'interposer entre l'enveloppe 22 et la paroi de séparation 1.

Ainsi, dans cette variante, l'enveloppe 22 ne s'étend pas longitudinalement à partir de la paroi de séparation 1 et n'est donc pas en contact avec celle-ci.

La deuxième partie 438 sépare aussi la première partie 326 du manchon 24 et la paroi de séparation 1.

Dans les ensembles 300 et 400, si le manchon 24 est coulé ou injecté dans l'espace interstitiel défini par l'enveloppe 22, on utilise à cet effet, par exemple, soit un coffrage amovible (non représenté) appliqué contre le côté inférieur 12 de la dalle et mis en place avant coulée du manchon, soit un capuchon (non représenté) appliqué contre ce côté 12 de la dalle et obturant le côté inférieur du manchon à l'instar du capuchon 125 de la figure 2.

## Revendications

1. Ensemble (10 ; 100 ; 200 ; 300 ; 400) comprenant un élément traversant (18), s'étendant sensiblement selon une direction longitudinale (L), l'élément traversant (18) étant destiné à traverser une paroi de séparation (1), l'ensemble (10 ; 100 ; 200 ; 300 ; 400) comprenant en outre :
- au moins une enveloppe (22 ; 122 ; 222) en matériau rigide, disposée au moins temporairement autour de l'élément traversant (18), l'élément traversant (18) s'étendant à travers un volume interne (28) défini par l'enveloppe, l'enveloppe ayant une extension longitudinale (L1) inférieure à l'extension longitudinale (L0) de l'élément traversant (18), et
- au moins un manchon (24 ; 124) destiné à agir comme un coupe-feu, le manchon (24 ; 124) s'étendant entre une surface externe (32) de l'élément traversant (18) et une surface interne (26 ; 126) de l'enveloppe (22 ; 122 ; 222),
la paroi de séparation (1) étant une dalle sensiblement horizontale, le manchon (24 ; 124) s'étendant longitudinalement à partir de la dalle, de préférence au-dessus de la dalle, ou la paroi de séparation (1) étant un mur sensiblement vertical, le manchon (24 ; 124) s'étendant longitudinalement à partir du mur,
le manchon (24 ; 124) étant adapté pour être installé après mise en place de l'enveloppe (22 ; 122 ; 222) autour de l'élément traversant, l'enveloppe (22 ; 122 ; 222) étant suffisamment rigide et étanche pour que le manchon (24 ; 124) soit coulé ou injecté dans un espace interstitiel (30) entre l'enveloppe (22 ; 122 ; 222) et l'élément traversant (18), **caractérisé en ce que** le manchon (24 ; 124) injectable ou coulable comprend, à au moins 70% en masse, du mortier de ciment, du béton ou du plâtre ; ou, à au moins 70% en masse, un colloïde.

2. Ensemble (10 ; 100 ; 200 ; 300 ; 400) selon la revendication 1, **caractérisé en ce que** le manchon (24 ; 124) comprend une substance ayant une capacité thermique volumique d'au moins 1000 kJ/(m³.K) et/ou une chaleur latente massique de changement d'état physique, dans une plage de températures comprises entre 0°C et 210°C, au moins égale à 200 kJ/kg.

3. Ensemble (10 ; 100 ; 200 ; 300 ; 400) selon la revendication 1 ou 2, **caractérisé en ce que** le colloïde est une colle, un gel ou une cire.

4. Ensemble (10 ; 100 ; 200 ; 300 ; 400) selon l'une quelconque des revendications 1 à 3, **caractérisé en ce que** l'enveloppe (22 ; 122 ; 222) est en métal, en plastique ou en bois, et de préférence en fonte.

5. Ensemble (10 ; 100 ; 200 ; 300 ; 400) selon l'une quelconque des revendications 1 à 4, **caractérisé en ce que** le manchon (24) présente radialement une épaisseur (E), le ratio de l'extension longitudinale (L1) de l'enveloppe (22 ; 122 ; 222) sur l'épaisseur (E) étant compris entre 0,5 et 7.

6. Ensemble (10; 100; 200; 300; 400) selon l'une quelconque des revendications 1 à 4, **caractérisé en ce que** l'élément traversant (18) et l'enveloppe (22 ; 122 ; 222) sont sensiblement coaxiaux, et de préférence de section sensiblement circulaire.

7. Ensemble (100) selon l'une quelconque des revendications 1 à 6, **caractérisé en ce qu'**il comprend en outre :
- une deuxième enveloppe (122) en matériau rigide, disposée autour de l'élément traversant (18), l'élément traversant (18) s'étendant à travers un volume interne défini par la deuxième enveloppe (122), la deuxième enveloppe (122) ayant une extension longitudinale (L2) inférieure à l'extension longitudinale (L0) de l'élément traversant (18), et
- un deuxième manchon (124) s'étendant entre une surface externe (32) de l'élément traversant (18) et une surface interne (126) de la deuxième enveloppe (122), le deuxième manchon (124) comprenant un liant hydraulique ou un colloïde,
la deuxième enveloppe (122) et le deuxième manchon (124) se situant longitudinalement de l'autre côté de la paroi de séparation (1) par rapport à l'enveloppe (22) et au manchon (24).

8. Ensemble (10 ; 100 ; 200) selon l'une quelconque des revendications 1 à 7, **caractérisé en ce qu'**il comprend en outre un matériau de remplissage (20), de préférence en mortier de ciment, destiné à combler un espace vide situé entre l'élément traversant (18) et la paroi de séparation (1).

9. Ensemble (300 ; 400) selon l'une quelconque des revendications 1 à 7, **caractérisé en ce qu'**il comprend optionnellement un isolant acoustique ou mécanique (334 ; 434), le manchon (24) comprenant une première partie (326) s'étendant radialement entre la surface externe (32) de l'élément traversant (18) et la surface interne (26) de l'enveloppe (22), et une deuxième partie (328) s'étendant radialement de la surface externe (32) jusqu'à l'isolant acoustique ou mécanique (334 ; 434), ou, en cas d'absence de l'isolant acoustique ou mécanique, jusqu'à la paroi de séparation (1).

10. Ensemble (200) selon l'une quelconque des revendications 1 à 9, **caractérisé en ce que** l'élément traversant (18) comprend un raccord (202), l'enveloppe (222) comprenant au moins deux parties (222A, 222B) rigides adaptées pour entourer le raccord (202), au moins temporairement, pendant que le manchon (24) est installé entre l'élément traversant (18) et l'enveloppe (222).

11. Procédé d'installation d'un manchon (24 ; 124) destiné à agir comme un coupe-feu au niveau d'une paroi de séparation (1) traversée par un élément traversant (18) s'étendant sensiblement selon une direction longitudinale (L), le procédé comprenant au moins les étapes suivantes :
- mise en place, au moins temporairement, d'une enveloppe (22 ; 122 ; 222) en matériau rigide autour de l'élément traversant (18), l'élément traversant (18) s'étendant à travers un volume interne (28) défini par l'enveloppe (22 ; 122 ; 222), l'enveloppe (22 ; 122 ; 222) ayant une extension longitudinale (L1 ; L2) inférieure à l'extension longitudinale (L0) de l'élément traversant, et
- installation d'un manchon (24 ; 124) s'étendant entre une surface externe (32) de l'élément traversant (18) et une surface interne (26 ; 126) de l'enveloppe (22 ; 122 ; 222), le manchon (24 ; 124) comprenant, à au moins 70% en masse, du mortier de ciment, du béton ou du plâtre ; ou, à au moins 70% en masse, un colloïde, la paroi de séparation (1) étant une dalle sensiblement horizontale, le manchon (24 ; 124) s'étendant longitudinalement à partir de la dalle, de préférence au-dessus de la dalle, ou la paroi de séparation (1) étant un mur sensiblement vertical, le manchon (24 ; 124) s'étendant longitudinalement à partir du mur,
l'enveloppe (22 ; 122 ; 222) étant suffisamment rigide et étanche, le manchon (24 ; 124) étant coulé ou injecté dans un espace interstitiel (30) entre l'enveloppe (22 ; 122 ; 222) et l'élément traversant (18).

## Patentansprüche

1. Einrichtung (10; 100; 200; 300; 400), aufweisend ein Durchtrittselement (18), welches sich im Wesentlichen entlang einer Longitudinalachse (L) erstreckt, wobei das Durchtrittselement (18) dazu bestimmt ist, eine Trennwand (1) zu durchqueren, wobei die Einrichtung (10; 100; 200; 300; 400) ferner aufweist:
- mindestens eine Umhüllung (22; 122; 222) aus starrem Material, welche zumindest temporär um das Durchtrittselement (18) herum angeordnet ist, wobei das Durchtrittselement (18) sich durch ein Innenvolumen (28), welches durch die Umhüllung definiert wird, hindurch erstreckt, wobei die Umhüllung eine Longitudinalerstreckung (L1) hat, die kleiner als die Longitudinalerstreckung (L0) des Durchtrittselements (18) ist, und
- mindestens eine Muffe (24; 124), welche dazu bestimmt ist, wie ein Brandschutz zu wirken, wobei die Muffe (24; 124) sich zwischen einer äußeren Fläche (32) des Durchtrittselements (18) und einer inneren Fläche (26; 126) der Umhüllung (22; 122; 222) erstreckt,
wobei die Trennwand (1) eine im Wesentlichen horizontale Bodenplatte ist, wobei sich die Muffe (24; 124) von der Bodenplatte aus longitudinal erstreckt, vorzugsweise über der Bodenplatte, oder die Trennwand (1) eine im Wesentlichen vertikale Wand ist, wobei sich die Muffe (24; 124) von der Wand aus longitudinal erstreckt,
wobei die Muffe (24; 124) dazu eingerichtet ist, nach dem Anbringen der Umhüllung (22; 122; 222) um das Durchtrittselement installiert zu werden, wobei die Umhüllung (22; 122; 222) hinreichend starr und abgedichtet ist, so dass die Muffe (24; 124) in einem Zwischenraum (30) zwischen der Umhüllung (22; 122; 222) und dem Durchtrittselement (18) gegossen oder gespritzt wird,
**dadurch gekennzeichnet, dass** die einspritzbare oder gießfähige Muffe (24; 124), zu mindestens 70 Gew.-%, Zementmörtel, Beton oder Gips, oder, zu mindestens 70 Gew.-%, ein Kolloid aufweist.

2. Einrichtung (10; 100; 200; 300; 400) gemäß dem Anspruch 1, **gekennzeichnet dadurch, dass** die Muffe (24; 124) eine Substanz mit einer Wärmespeicherzahl von mindestens 1000 kJ/(m³.K) und/oder einer auf die Masse bezogenen latenten Wärme zur Änderung des physikalischen Zustands von mindestens gleich 200 kJ/kg in einem Temperaturbereich zwischen 0°C und 210°C aufweist.

3. Einrichtung (10; 100; 200; 300; 400) gemäß dem Anspruch 1 oder 2, **gekennzeichnet dadurch, dass** das Kolloid ein Klebstoff, ein Gel oder ein Wachs ist.

4. Einrichtung (10; 100; 200; 300; 400) gemäß irgendeinem der Ansprüche 1 bis 3, **gekennzeichnet dadurch, dass** die Umhüllung (22; 122; 222) aus Metall, aus Kunststoff oder aus Holz, vorzugsweise aus Gusseisen, ist.

5. Einrichtung (10; 100; 200; 300; 400) gemäß irgendeinem der Ansprüche 1 bis 4, **gekennzeichnet dadurch, dass** die Muffe (24) radial eine Dicke(E)aufweist, wobei das Verhältnis aus der Longitudinalerstreckung (L1) der Umhüllung (22; 122; 222) zu der Dicke (E) zwischen 0,5 und 7 beträgt.

6. Einrichtung (10; 100; 200; 300; 400) gemäß irgendeinem der Ansprüche 1 bis 4, **gekennzeichnet dadurch, dass** das Durchtrittselement (18) und die Umhüllung (22; 122; 222) im Wesentlichen koaxial und bevorzugt aus im Wesentlichen kreisförmigen Querschnitt sind.

7. Einrichtung (100) gemäß irgendeinem der Ansprüche 1 bis 6, **gekennzeichnet dadurch, dass** sie ferner aufweist:
- eine zweite Umhüllung (122) aus starrem Material, welche um das Durchtrittselement (18) herum angeordnet ist, wobei das Durchtrittselement (18) sich durch ein Innenvolumen, welches durch die zweite Umhüllung (122) definiert wird, hindurch erstreckt, wobei die zweite Umhüllung (122) eine Longitudinalerstreckung (L2) hat, die kleiner als die Longitudinalerstreckung (L0) des Durchtrittselements (18) ist, und
- eine zweite Muffe (124), welche sich zwischen einer äußeren Fläche (32) des Durchtrittselements (18) und einer inneren Fläche (126) der zweiten Umhüllung (122) erstreckt, wobei die zweite Muffe (124) ein hydraulisches Bindemittel oder ein Kolloid aufweist,
wobei die zweite Umhüllung (122) und die zweite Muffe (124) sich longitudinal auf der anderen Seite der Trennwand (1) bezogen auf die Umhüllung (22) und die Muffe (24) befinden.

8. Einrichtung (10; 100; 200) gemäß irgendeinem der Ansprüche 1 bis 7, **gekennzeichnet dadurch, dass** sie ferner ein Füllmaterial (20), vorzugsweise aus Zementmörtel, aufweist, welches dazu bestimmt ist, einen leeren Raum zu füllen, welcher sich zwischen dem Durchtrittselement (18) und der Trennwand (1) befindet.

9. Einrichtung (300; 400) gemäß irgendeinem der Ansprüche 1 bis 7, **gekennzeichnet dadurch, dass** sie ferner optional eine akustische oder mechanische Isolierung (334, 434) aufweist, wobei die Muffe (24) einen ersten Abschnitt (326), welcher sich radial zwischen der äußeren Fläche (32) des Durchtrittselements (18) und der inneren Fläche (26) der Umhüllung (22) erstreckt, und einen zweiten Abschnitt (328), welcher sich radial von der äußeren Fläche (32) aus bis zur akustischen oder mechanischen Isolierung oder, im Falle der Abwesenheit der akustischen oder mechanischen Isolierung, bis zur Trennwand (1) erstreckt, aufweist.

10. Einrichtung (200) gemäß irgendeinem der Ansprüche 1 bis 9, **gekennzeichnet dadurch, dass** das Durchtrittselement (18) ein Verbindungsstück (202) aufweist, wobei die Umhüllung (222) mindestens zwei starre Abschnitte (222A, 222B) aufweist, welche dazu eingerichtet sind, das Verbindungsstück (202), zumindest temporär, zu umgeben, während die Muffe (24) zwischen dem Durchtrittselement (18) und der Umhüllung (222) installiert wird.

11. Verfahren zur Installation einer Muffe (24; 124), welche dazu bestimmt ist, als ein Brandschutz zu wirken, an einer Trennwand (1), welche durch ein Durchtrittselement (18) durchquert wird, dass sich im Wesentlich entlang einer Longitudinalrichtung (L) erstreckt, wobei das Verfahren mindestens die folgenden Schritte aufweist:
- Anbringen, zumindest temporär, einer Umhüllung (22; 122; 222) aus starrem Material um das Durchtrittselement (18), wobei das Durchtrittselement (18) sich durch ein Innenvolumen (28), welches durch die Umhüllung (22; 122; 222) definiert wird, hindurch erstreckt, wobei die Umhüllung (22; 122; 222) eine Longitudinalerstreckung (L1) hat, die kleiner als die Longitudinalerstreckung (L0) des Durchtrittselements (18) ist, und
- Installieren einer Muffe (24; 124), welche sich zwischen einer äußeren Fläche (32) des Durchtrittselements (18) und einer inneren Fläche (26; 126) der Umhüllung (22; 122; 222) erstreckt, wobei die Muffe (24; 124), zu mindestens 70 Gew.-%, Zementmörtel, Beton oder Gips, oder, zu mindestens 70 Gew.-%, ein Kolloid aufweist,
wobei die Trennwand (1) eine im Wesentlichen horizontale Bodenplatte ist, wobei sich die Muffe (24; 124) von der Bodenplatte aus longitudinal erstreckt, vorzugsweise über der Bodenplatte, oder die Trennwand (1) eine im Wesentlichen vertikale Wand ist, wobei sich die Muffe (24; 124) von der Wand aus longitudinal erstreckt,
wobei die Umhüllung (22; 122; 222) hinreichend starr und abgedichtet ist, wobei die Muffe (24; 124) in einem Zwischenraum (30) zwischen der Umhüllung (22; 122; 222) und dem Durchtrittselement (18) gegossen oder gespritzt wird.

## Claims

1. Assembly (10; 100; 200; 300; 400) comprising a cross member (18) extending substantially in a longitudinal direction (L), the cross member (18) being intended to pass through a separating wall (1), the assembly (10; 100; 200; 300; 400) further comprising:
- at least one casing (22; 122; 222) of rigid material which is arranged at least temporarily around the cross member (18), the cross member (18) extending through an inner volume (28) defined by the casing, the casing having a longitudinal extent (L1) which is less than the longitudinal extent (L0) of the cross member (18), and
- at least one sleeve (24; 124) which is to act as a firebreak, the sleeve (24; 124) extending between an outer surface (32) of the cross member (18) and an inner surface (26; 126) of the casing (22; 122; 222),
the separating wall (1) being a substantially horizontal slab, the sleeve (24; 124) extending longitudinally from the slab, preferably above the slab, or the separating wall (1) being a substantially vertical wall, the sleeve (24; 124) extending longitudinally from the wall,
the sleeve (24; 124) being adapted to be installed after the casing (22; 122; 222) has been fitted around the cross member, the casing (22; 122; 222) being sufficiently rigid and leak-tight that the sleeve (24; 124) is poured or injected into an interstitial space (30) between the casing (22; 122; 222) and the cross member (18),
**characterised in that** the injectable or pourable sleeve (24; 124) comprises, in an amount of at least 70% by mass, cement mortar, concrete or plaster or, in an amount of at least 70% by mass, a colloid.

2. Assembly (10; 100; 200; 300; 400) according to claim 1, **characterised in that** the sleeve (24; 124) comprises a substance having a volumetric heat capacity of at least 1000 kJ/(m³.K) and/or a specific latent heat of change of physical state, in a temperature range between 0°C and 210°C, at least equal to 200 kJ/kg.

3. Assembly (10; 100; 200; 300; 400) according to claim 1 or 2, **characterised in that** the colloid is a glue, a gel or a wax.

4. Assembly (10; 100; 200; 300; 400) according to any one of claims 1 to 3, **characterised in that** the casing (22; 122; 222) is made of metal, of plastics material or of wood, and preferably of cast iron.

5. Assembly (10; 100; 200; 300; 400) according to any one of claims 1 to 4, **characterised in that** the sleeve (24) has radially a thickness (E), the ratio of the longitudinal extent (L1) of the casing (22; 122; 222) to the thickness (E) being between 0.5 and 7.

6. Assembly (10; 100; 200; 300; 400) according to any one of claims 1 to 4, **characterised in that** the cross member (18) and the casing (22; 122; 222) are substantially coaxial, and preferably of substantially circular cross-section.

7. Assembly (100) according to any one of claims 1 to 6, **characterised in that** it further comprises:
- a second casing (122) of rigid material arranged around the cross member (18), the cross member (18) extending through an inner volume defined by the second casing (122), the second casing (122) having a longitudinal extent (L2) which is less than the longitudinal extent (L0) of the cross member (18), and
- a second sleeve (124) extending between an outer surface (32) of the cross member (18) and an inner surface (126) of the second casing (122), the second sleeve (124) comprising a hydraulic binder or a colloid,
the second casing (122) and the second sleeve (124) being located longitudinally on the other side of the separating wall (1) relative to the casing (22) and the sleeve (24).

8. Assembly (10; 100; 200) according to any one of claims 1 to 7, **characterised in that** it further comprises a filling material (20), preferably of cement mortar, which is to fill an empty space situated between the cross member (18) and the separating wall (1).

9. Assembly (300; 400) according to any one of claims 1 to 7, **characterised in that** it optionally comprises an acoustic or mechanical insulation (334; 434), the sleeve (24) comprising a first portion (326) extending radially between the outer surface (32) of the cross member (18) and the inner surface (26) of the casing (22), and a second portion (328) extending radially from the outer surface (32) to the acoustic or mechanical insulation (334; 434) or, where the acoustic or mechanical insulation is absent, to the separating wall (1).

10. Assembly (200) according to any one of claims 1 to 9, **characterised in that** the cross member (18) comprises a connector (202), the casing (222) comprising at least two rigid portions (222A, 222B) which are adapted to surround the connector (222), at least temporarily, while the sleeve (24) is installed between the cross member (18) and the casing (222).

11. Method for installing a sleeve (24; 124) which is to act as a firebreak in a separating wall (1) through which there passes a cross member (18) extending substantially in a longitudinal direction (L), the method comprising at least the following steps:
- fitting, at least temporarily, a casing (22; 122; 222) of rigid material around the cross member (18), the cross member (18) extending through an inner volume (28) defined by the casing (22; 122; 222), the casing (22; 122; 222) having a longitudinal extent (L1, L2) which is less than the longitudinal extent (L0) of the cross member, and
- installing a sleeve (24; 124) which extends between an outer surface (32) of the cross member (18) and an inner surface (26; 126) of the casing (22; 122; 222), the sleeve (24; 124) comprising, in an amount of at least 70% by mass, cement mortar, concrete or plaster or, in an amount of at least 70% by mass, a colloid, the separating wall (1) being a substantially horizontal slab, the sleeve (24; 124) extending longitudinally from the slab, preferably above the slab, or the separating wall (1) being a substantially vertical wall, the sleeve (24; 124) extending longitudinally from the wall,
the casing (22; 122; 222) being sufficiently rigid and leak-tight, the sleeve (24; 124) being poured or injected into an interstitial space (30) between the casing (22; 122; 222) and the cross member (18).
